# EUROPEAN PATENT APPLICATION

(11) **EP 1 936 222 A2**
(43) Date of publication of application: **25.06.2008**
(21) Application number: 07254742.5
(22) Date of filing: 07.12.2007
(51) Int. Cl.: F16D 13/64

(54) **Clutch disc**

(30) Priority: 13.12.2006 JP 2006335832
(71) Applicant: Toyota Jidosha Kabushiki Kaisha, Toyota-shi, Aichi 471-8571 (JP)
(72) Inventor: Ichikawa, Shigeru c/o Toyota Jidosha Kabushiki kaisha, Aichi-ken 471-8571 (JP)
(74) Representative: Harris, Ian Richard

(57) **Abstract**

A retaining portions (10f) which protrudes on a first clutch facing (11) side is provided on a first plate portion (10c) of a disc spring (10), and a retaining portion (10g) which protrudes on a second clutch facing (12) side is provided on a second plate portion (10d). When adhering continuous fiber material to each plate portion (10c, 10d) to which an adhesive has been applied, some of the continuous fiber material is separately retained by each of the retaining portions (10f, 10g).

## Description

### BACKGROUND OF THE INVENTION

### 1. Field of the Invention

The invention relates to a clutch disc that is arranged between an engine and a transmission of a vehicle such as an automobile. More particularly, the invention relates to a measure for improving the adhesion performance of a clutch facing that directly transmits torque from the engine.

### 2. Description of the Related Art

Typically, a clutch disc for a vehicle such as an automobile is a device which transmits torque between the engine and the transmission, and is provided with a clutch facing that can elastically deform in the axial direction by a disc spring. When the clutch facing is pressed against the flywheel on the engine side by a pressure plate on the clutch cover, the clutch facing is sandwiched between the flywheel and the pressure plate such that torque from the flywheel on the engine side is input to an input side plate from the clutch facing via the clutch disc. This torque is transmitted to an output side hub via a damper portion and output to the transmission on the output side. When the clutch facing of the clutch disc is pressed against the flywheel in this way, the clutch engages and torque is transmitted. In this case, the elastic deformation in the axial direction of the clutch facing by the disc spring absorbs shock generated when torque starts, as well as stops, being transmitted from the engine side to the transmission side (i.e., absorbs shock generated by engagement and disengagement of the clutch) during shifting.

This kind of clutch facing is arranged on both sides of the clutch disc in the axial direction, one facing the pressure plate of the clutch cover and the other facing the flywheel on the engine side. These clutch facings are attached separately to plates of the disc spring that are provided between clutch facings. That is, one of the clutch facings is attached to a first plate of the disc spring and the other clutch facing is attached to a second plate of the disc spring.

One known method for attaching the clutch facings to the plates of the disc spring is described in Japanese Patent Application Publication No. 3-260426 (JP-A-3-260426), for example. According to the described method, the clutch facings are integrally formed by hot pressing backup material and clutch facing material that have been laminated together in a mold, and then attaching the thus formed clutch facings to the plates of the disc spring using rivets.

However, when rivets are used, holes for the rivets must be formed in the clutch facings, which reduces the friction area of the clutch facings. Moreover, using rivets also increases the number of man hours which adversely effects workability.

Therefore, technology has been proposed that improves workability while ensuring the friction area of the clutch disc by adhering the clutch facings to the plates of the disc spring using an adhesive such as vulcanized rubber, thus obviating the need for rivets.

However, repeated use of the clutch results in frictional heat and shearing stress to be repeatedly applied between the clutch facings and the plates of the disc spring. Accordingly, with technology that adheres the clutch facings to the plates of the disc spring using an adhesive, such as the proposed technology described above, the adhesive that adheres the clutch facings to the plates of the disc spring together tends to deteriorate from the repeated application of frictional heat and shearing stress, and as a result, the adhesion performance between the two declines remarkably.

### SUMMARY OF THE INVENTION

This invention provides a clutch disc that can suppress a decline in adhesion performance between a clutch facing and a plate of a disc spring which are adhered together.

A first aspect of the invention relates to a clutch disc provided with a first clutch facing on one side in the axial direction and a second clutch facing on the other side in the axial direction. This clutch disc includes a disc spring that is provided between the first clutch facing and the second clutch facing in the axial direction. The disc spring has a first plate and a second plate and can elastically deform in the axial direction of the first plate and the second plate. Further, an inside surface in the axial direction of the first clutch facing on one side in the axial direction, from among the two clutch facings, is adhered to the first plate, while an inside surface in the axial direction of the second clutch facing on the other side in the axial direction is adhered to the second plate. Moreover, a retaining portion that retains some continuous fiber material that forms the first clutch facing and the second clutch facing is provided on each of the first plate and the second plate.

Accordingly, some of the continuous fiber material of the first and second clutch facings that are adhered to the first and second plates, respectively, of the disc spring is separately retained by the retaining portions of the first and second plates. As a result, even if shearing force is repeatedly applied between the clutch facings and the plates of the disc spring due to repeated use of the clutch, some of that shearing force can be received by the continuous fiber material that is retained by the retaining portions. Therefore, the shearing force that repeatedly acts on the adhesive that adheres the two together is reduced, thus inhibiting deterioration of the adhesive. As a result, the adhesion performance between the clutch facings and the plates of the disc spring can be improved. In addition, even if the adhesion performance does decline due to deterioration of the adhesive from frictional heat caused by repeated use of the clutch, retaining some of the continuous fiber material by the retaining portions of the plates makes it possible to effectively prevent the clutch facings from peeling away from the plates of the disc spring.

Also, when forming the clutch facings with the continuous fiber material on the plates when the retaining portions each protrude out in a hook shape toward the outside in the axial direction from the first and second plates, respectively, some of the continuous fiber material is easily retained by the retaining portions. That is, When forming the clutch facings in a predetermined donut shape by winding the continuous fiber material in a spiral on the outside surface in the axial direction of the plates of the disc spring that is mounted to the jig, some of the continuous fiber material that started to be wound tends to be retained by the retaining portions. As a result, some of the continuous fiber material can easily be retained by the retaining portions when forming the clutch facings.

Moreover, when the retaining portions each protrude in a hook shape toward the inside in the axial direction from the first and second plates, respectively, there are no retaining portions on the outside in the axial direction of the plates so the effective friction area of the clutch facings from the adhesive surfaces of the plates can be increased in the axial direction, which enables the friction life of the clutch facings to be increased. Moreover, because a sufficient increase in the effective friction area of the first and second clutch facings from the adhesive surfaces of the first and second plates can be ensured, the effective friction area of the first and second clutch facings can be reduced in the axial direction so the rotary inertia moment of the clutch disc can also be reduced.

Accordingly, by retaining some of the continuous fiber material of the first and second clutch facings that are adhered to the first and second plates, respectively, of the disc spring in each of the retaining portions of the first and second plates, some of the shearing force that is applied from repeated use of the clutch can be received by the continuous fiber material that is retained by the retaining portions. As a result, the shearing force that acts on the adhesive can be reduced which inhibits the deterioration of the adhesive such that the adhesion performance between the clutch facings and the plates of the disc spring can be improved. Moreover, even if the adhesion performance does decline due to deterioration of the adhesive from frictional heat caused by repeated use of the clutch, it is still possible to effectively prevent the clutch facings from peeling away from the plates of the disc spring.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a longitudinal sectional view of a clutch disc according to a first example embodiment of the invention;
FIG. 2 is a plan view of only half of the clutch disc;
FIG. 3 is a perspective view of a disc spring as viewed from the front side;
FIG. 4 is a longitudinal sectional view of a first plate portion cut near a retaining portion;
FIG. 5 is a front view of the disc spring in which some continuous fiber material is retained by retaining portions when the disc spring is mounted to a jig;
FIG. 6 is a side view of the disc spring as viewed from the direction of arrow VI in FIG. 5;
FIG. 7 is a sectional view taken along line VII-VII in FIG. 5;
FIG. 8 is a perspective view of a disc spring of a clutch disc according to a second example embodiment of the invention as viewed from the front; and
FIG. 9 is a longitudinal sectional view of a first plate portion cut near a retaining portion.

### DETAILED DESCRIPTION OF THE EMBODIMENTS

In the following description and the accompanying drawings, the present invention will be described in more detail in terms of exemplary embodiments.

### First example embodiment

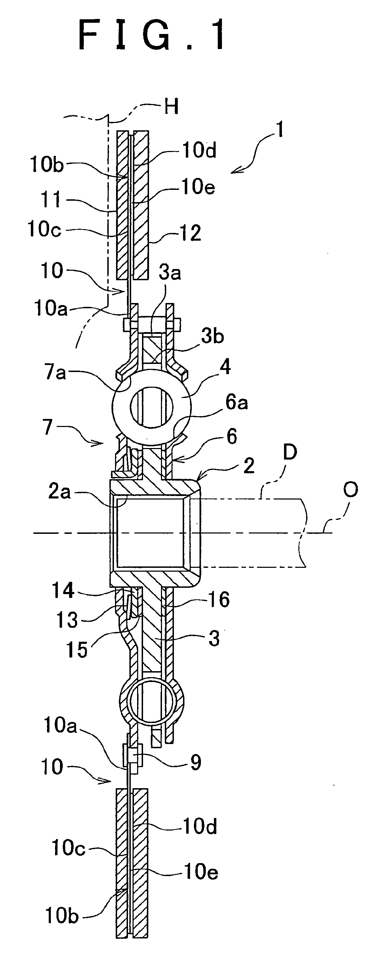

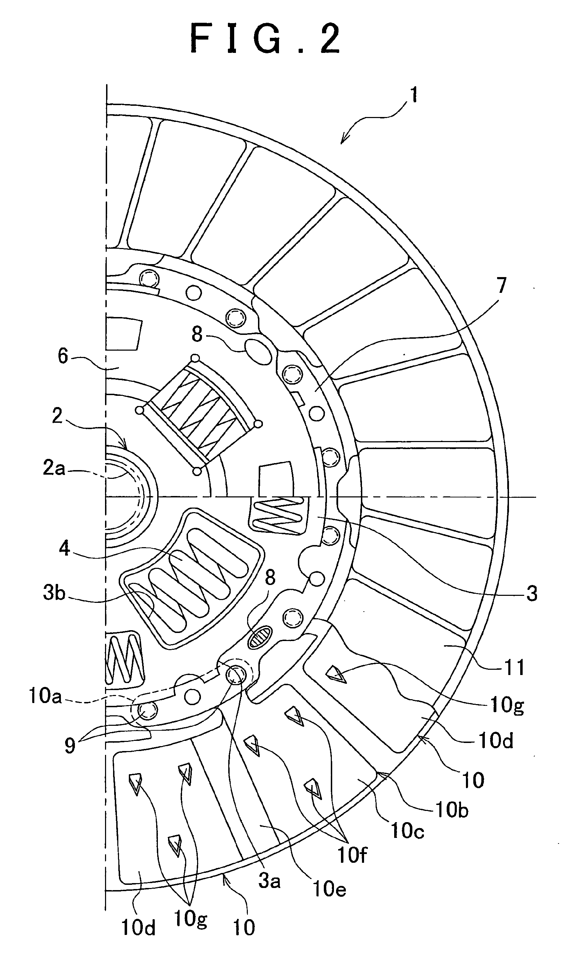

FIGS. 1 and 2 are views showing a clutch disc 1 for a vehicle according to a first example embodiment of the invention. This clutch disc 1 is a device for transmitting torque from a flywheel H on the engine side to a main drive shaft D on the transmission side. In FIG. 1, reference character O represents the rotational axis of the crankshaft 1.

A spline hub 2 that is connected to the main drive shaft D is arranged at the center of this clutch disc 1. The spline hub 2 has a spline hole 2a that has grooves into which splines, not shown, on the main drive shaft D fit. Also, a flange portion 3 that protrudes to the outer peripheral side is formed on the spline hub 2.

As shown in FIG. 2, a stop pin notch 3a (only one is shown in FIG. 2) is formed in four locations at predetermined intervals in the outer peripheral portion of the flange portion 3. A window hole 3b is formed on the inner peripheral side of each notch 3a, and a torsion spring 4 is housed in each window hole 3b.

A substantially disc-shaped pair of plates that consists of a retaining plate 6 and a clutch plate 7 are arranged opposing one another across the flange portion 3 on the outer peripheral side of the spline hub 2. Both plates 6 and 7 fit in the inner peripheral portion and rotate freely relative to the spline hub 2. The retaining plate 6 and the clutch plate 7 are integrally connected by a stop pin 8 at outer peripheral portions. The stop pin 8 maintains the distance in the axial direction between the retaining plate 6 and the clutch plate 7 and restricts the relative rotation angle between both the retaining plate 6 and clutch plate 7 and the flange portion 3 by abutting against the stop pin notch 3a in the flange portion 3 in the circumferential direction.

Eight disc springs 10 (only two are shown in FIG. 2) which are provided at predetermined intervals (e.g., every 45°) in the circumferential direction are fixed by rivets 9 to the outer peripheral portion of the clutch plate 7. Each disc spring 10 includes a leg portion 10a that is fixed by rivets 9, and a plate piece 10b that extends radially outward from this leg portion 10a. This plate piece 10b includes a first plate portion 10c (i.e., first plate) that is positioned on the same plane in the axial direction as the leg portion 10a, and a second plate portion 10d (i.e., second plate) that is positioned to one side in the axial direction (i.e., the right side in FIG. 1) of that first plate portion 10c. Also, a stepped portion 10e that is bent like a step in the axial direction is integrally formed in a substantially middle position in the circumferential direction of the plate piece 10b, i.e., between the first plate portion 10c and the second plate portion 10d. The stepped portion 10e enables the first plate portion 10c and the second plate portion 10d of each disc spring 10 to elastically deform in the axial direction. In this case, the first plate portion 10c and the second plate portion 10d of each disc spring 10 are arranged between, in the axial direction, a first clutch facing 11 and a second clutch facing 12. These clutch facings 11 and 12 will be described later.

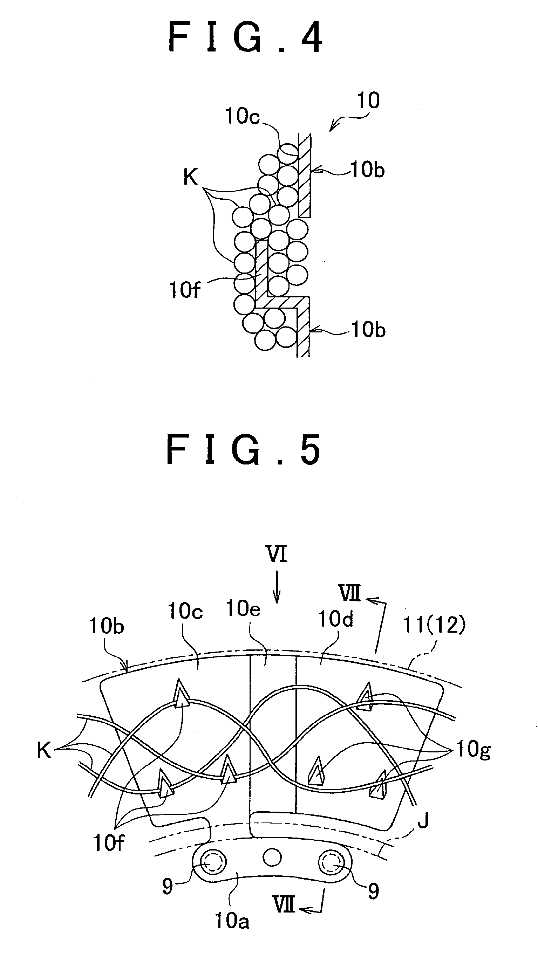

The inside surface in the axial direction of the first clutch facing 11 that is on one side in the axial direction (i.e., the left side in FIG. 1), among the pair of clutch facings 11 and 12 that are arranged opposing one another in the axial direction, is adhered to the first plate portion 10c by an adhesive such as vulcanized rubber. Similarly, the inside surface in the axial direction of the second facing 12 on the other side in the axial direction is adhered to the second plate portion 10d by an adhesive such as vulcanized rubber. The first and second clutch facings 11 and 12 are formed of a continuous fiber material K (see FIGS. 4 to 7) such as glass fiber that is wound in a spiral, an adhesive such as vulcanized rubber that is impregnated in that continuous fiber material K, and a heat-hardening resin or the like.

Also, as shown in FIG. 1, window holes 6a are formed in the retaining plate 6 and window holes 7a are formed in the clutch plate 7 corresponding to the window holes 3b in the flange portion 3. These window holes 6a and 7a are cut out so that they surround the torsion springs 4, which are housed therein. Both end portions of the torsion springs 4 abut against both plates 6 and 7 and both end portions of the window holes 3b in the flange portion 3, thereby transferring torque between the plates 6 and 7 and the flange portion 3.

An annular cone spring 13, a friction plate 14, and a friction washer 15 are provided, in that order from the engine side, between the inner peripheral portion of the flange portion 3 and the inner peripheral portion of the clutch plate 7. Also, a friction washer 16 is arranged between the flange portion 3 and the inner peripheral portion of the retaining plate 6. These friction washers 15 and 16 slide between the flange portion 3 and both of the plates 7 and 6, thus producing a predetermined frictional force (hysteresis torque).

Here, operation of the clutch disc 1 will be described.

When the clutch is operated, a pressure plate, not shown, of the clutch cover is pushed toward the flywheel H side such that the first clutch facing 11 is pressed against the flywheel H. At this time, the first and second clutch facings 11 and 12 become coupled together in the axial direction and torque from the flywheel H is input to the first and second clutch facings 11 and 12. This torque is then transmitted from the first and second clutch facings 11 and 12 to the clutch plate 7 and the retaining plate 6 via the disc springs 10. Then the torque is transmitted to the flange portion 3 via the torsion springs 4 and the like after which it is output from the spline hub 2 to the main drive shaft D.

In this case, the clutch disc 1 both transmits torque and reduces torsional vibration. When torsional vibration is transmitted to the clutch plate 7 and the retaining plate 6, the torsion springs 4 repeatedly contract such that the plates 6 and 7 repeatedly rotate relative to the spline hub 2. At this time, hysteresis torque is generated at the sliding portion of the friction washers 15 and 16 and the flange portion 3, which damps the torsional vibration.

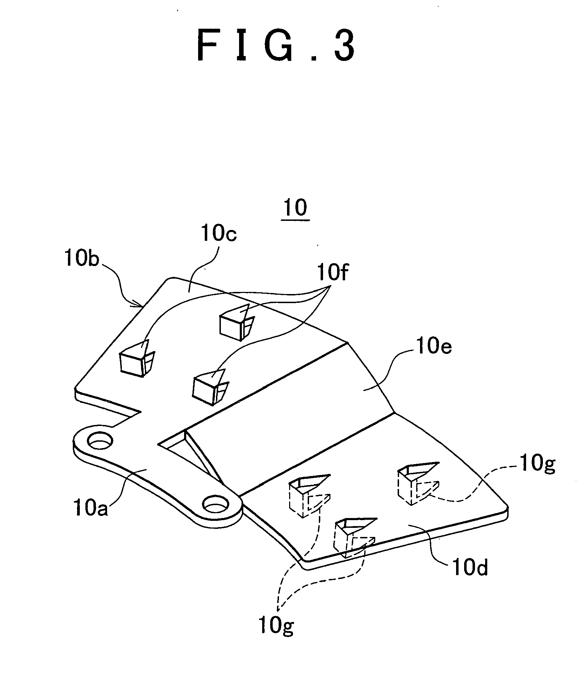

As shown in FIGS. 3 and 4, three retaining portions 10f which protrude toward the first clutch facing 11 side are provided on the first plate portion 10c. These retaining portions 10f are a characteristic part of the invention. Similarly, three retaining portions 10g which protrude toward the second clutch facing 12 side are provided on the second plate portion 10d. Each retaining portion 10f and 10g is made to protrude outward in the axial direction by a pressing machine and is formed in a generally triangular hook shape with the tip of each protruding portion pointing radially outward.

Next, an example of a procedure for adhering the first and second clutch facings 11 and 12 to the first and second plate portions 10c and 10d, respectively, will be described with reference to FIGS. 5 to 7.

First, an adhesive such as vulcanized rubber is applied to the outside side surfaces in the axial direction of the first and second plate portions 10c and 10d in which the retaining portions 10f and 10g were formed by the press machine, i.e., to the surfaces on the first and second clutch facing 11 and 12 sides.

Next, as shown in FIG. 5, eight disc springs 10 in which the adhesive has been applied to the first and second plate portions 10c and 10d are each mounted in predetermined positions (i.e., positions that are the same as the positions in which they will be fixed to the outer peripheral portion of the clutch plate 7) to a disc-shaped jig J. At this time, each disc spring 10 is mounted such that the adhesive surface of the first plate portion 10c (i.e., the surface on the first clutch facing 11 side) is facing forward.

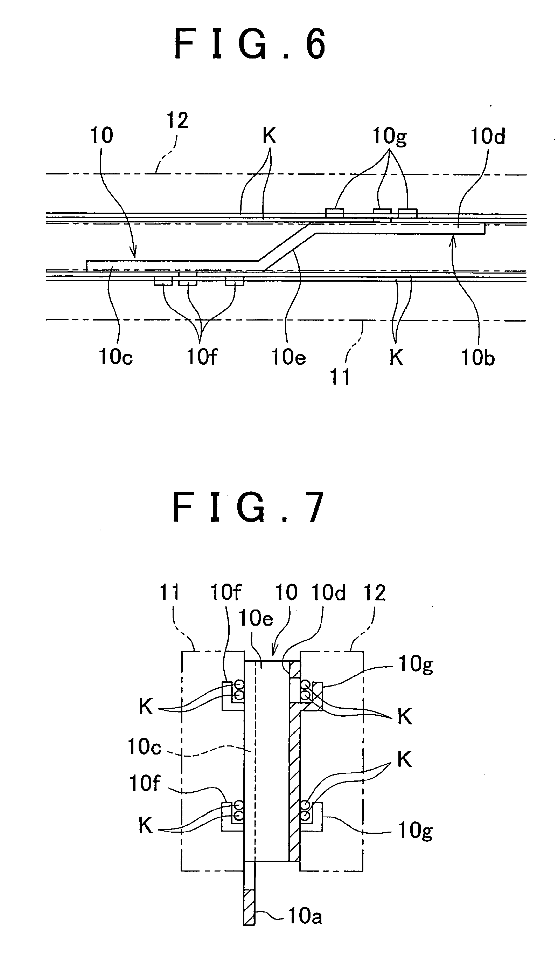

Then, as shown in FIGS. 6 and 7, the first clutch facing 11 is arranged in a predetermined donut shape by winding continuous fiber material K such as glass fiber in a spiral on the adhesive surface (on the first clutch facing 11 side) of each first plate portion 10c, while retaining some of the continuous fiber material K by the retaining portions 10f of the first plate portion 10c of each disc spring 10. At this time, the adhesive that was applied to each first plate portion 10c is impregnated in the continuous fiber material K.

Then each disc spring 10 to which the first clutch facing 11 has been attached to the first plate portion 10c is removed from the jig J, turned over such that the adhesive surface of the second plate portion 10d (i.e., the surface on the second clutch facing 12 side) now faces forward, and mounted to the jig J again. Next, the clutch facing 12 is arranged in a predetermined donut shape by winding the continuous fiber material K, e.g., glass fiber, in a spiral on the adhesive surface of each second plate portion 10d of each disc spring 10, while retaining some of the continuous fiber material K by the retaining portions 10g of each second plate portion 10d. At this time, the adhesive (i.e., vulcanized rubber) that was applied to each second plate portion 10d is impregnated in the continuous fiber material K.

Then each disc spring 10 is removed from the jig J and the first and second clutch facings 11 and 12 are heat formed using a heat-hardening resin such as phenol resin. Next, the first and second clutch facings 11 and 12 are heat treated for 8 hours at 80°C and the heat-hardening resin is hardened. According to this process, the first and second clutch facings 11 and 12 that were adhered to the first and second plate portions 10c and 10d, respectively, of each disc spring 10 are obtained.

Accordingly, in the foregoing first example embodiment, some of the continuous fiber material K of the first and second clutch facings 11 and 12 that are adhered to the first and second plate portions 10c and 10d of the disc spring 10 is retained by the retaining portions 10f and 10g of the first and second plate portions 10c and 10d, respectively. As a result, even if shearing force is repeatedly applied between the first and second clutch facings 11 and 12 and the first and second plate portions 10c and 10d of the disc plate 10 due to repeated use of the clutch, some of that shearing force can be received by the continuous fiber material K that is retained by the retaining portions 10f and 10g. Accordingly, the shearing force that is repeatedly applied to the adhesive that adheres the first and second clutch facings 11 and 12 to the first and second plate portions 10c and 10d of the disc spring 10 can be reduced so the adhesive will not easily deteriorate. As a result, the adhesion performance between the first and second clutch facings 11 and 12 and the first and second plate portions 10c and 10d of the disc spring 10 can be improved. In addition, even if the adhesion performance does deteriorate from frictional heat caused by repeated use of the clutch, retaining some of the continuous fiber material K by the retaining portions 10f and 10g of the first and second plate portions 10c and 10d makes it possible to effectively prevent the first and second clutch facings 11 and 12 from peeling away from the first and second plate portions 10c and 10d of the disc spring 10.

Also, the retaining portions 10f and 10g of the first and second plate portions 10c and 10d, respectively, are each made to protrude outward in the axial direction and formed in a generally triangular hook shape with the tip of each protruding portion pointing radially outward. As a result, when forming the first and second clutch facings 11 and 12 using the continuous fiber material K on the first and second plate portions 10c and 10d, some of that continuous fiber material K tends to be retained by the retaining portions 10f and 10g. That is, when forming the first and second clutch facings 11 and 12 in a predetermined donut shape by winding the continuous fiber material K on the outside surface in the axial direction (i.e., the adhesive surface to which the adhesive has been applied) of the first and second plate portions 10c and 10d of each disc spring 10 that is mounted on the jig J, some of the continuous fiber material K that was first wound is easily retained by the retaining portions 10f and 10g. As a result, some of the continuous fiber material K is easily retained by the retaining portions 10f and 10g when forming the first and second clutch facings 11 and 12.

### Second example embodiment

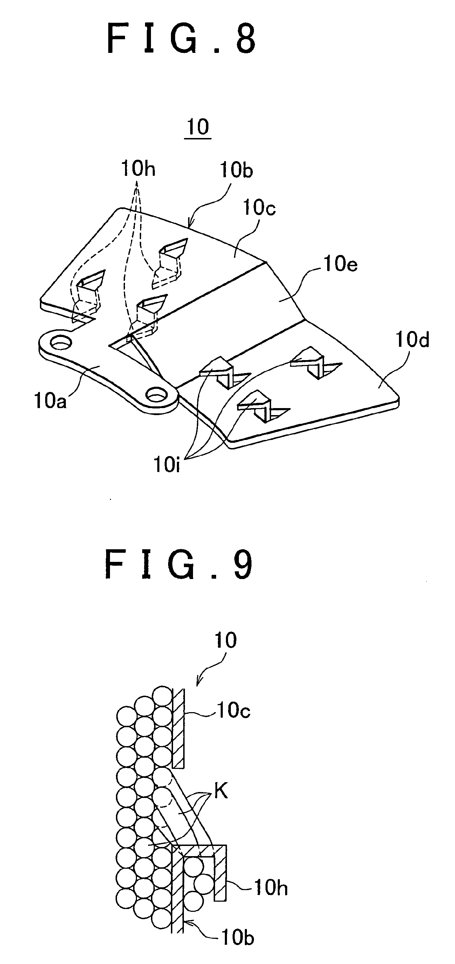

Next, a second example embodiment of the invention will be described with reference to FIGS. 8 and 9.

This second example embodiment differs from the first example embodiment described above in that the retaining portions are different. Except for the retaining portions, all other structure is the same as it is in the first example embodiment described above. Therefore, like portions will be denoted by like reference numerals and detailed descriptions of those portions will be omitted.

That is, in this example embodiment, three retaining portions 10h which protrude toward the second clutch facing 12 side are provided on the first plate portion 10c, as shown in FIGS. 8 and 9. Similarly, three retaining portions 10i which protrude toward the first clutch facing 11 side are provided on the second plate portion 10d. These retaining portions 10h and 10i are each made to protrude inward in the axial direction by a pressing machine and formed in a generally triangular hook shape with the tip of each protruding portion pointing radially inward.

Next, an example of a procedure for adhering the first and second clutch facings 11 and 12 to the first and second plate portions 10c and 10d, respectively, will be described.

First, an adhesive is applied to the outside surfaces in the axial direction of the first and second plate portions 10c and 10d in which the retaining portions 10f and 10g were formed by the press machine, i.e., the surfaces on the first and second clutch facing 11 and 12 sides.

Next, eight disc springs 10 in which the adhesive has been applied to the first and second plate portions 10c and 10d are each mounted in predetermined positions (i.e., positions that are the same as the positions in which they will be fixed to the outer peripheral portion of the clutch plate 7) to a disc-shaped jig J. At this time, each disc spring 10 is mounted such that the adhesive surface of the first plate portion 10c (i.e., the surface on the first clutch facing 11 side) is facing forward.

Then, the first clutch facing 11 is arranged in a predetermined donut shape by winding continuous fiber material K such as glass fiber in a spiral on the adhesive surface of the first plate portion 10c of each disc spring 10. At this time, the adhesive that was applied to each first plate portion 10c is impregnated in the continuous fiber material K.

Next, some of the continuous fiber material K from a portion on the first plate portion 10c side is pulled out using an implement such as a hooked rod through holes corresponding to the retaining portions 10h which were formed at the same time that the first plate portion 10c was formed. The continuous fiber material K that was pulled out through the holes using the implement is retained by the retaining portions 10h of each first plate portion 10c. As a result, some of the continuous fiber material K is retained by the retaining portions 10h when adhering the continuous fiber material K to each of the first plate portions 10c to which the adhesive has been applied.

Then each disc spring 10 is removed from the jig J, turned over such that the adhesive surface of the second plate portion 10d (i.e., the surface on the second clutch facing 12 side) now faces forward, and mounted to the jig J again. Next, the clutch facing 12 is arranged in a predetermined donut shape by winding the continuous fiber material K in a spiral on the adhesive surface of the second plate portion 10d of each disc spring 10. At this time, the adhesive that was applied to each second plate portion 10d is impregnated in the continuous fiber material K.

Next, some of the continuous fiber material K from a portion on the second plate portion 10d side is pulled out through the holes using an implement such as a hooked rod. The continuous fiber material K that was pulled out through the holes using the implement is retained by the retaining portions 10i of each second plate portion 10d. As a result, some of the continuous fiber material K is retained by the retaining portions 10i when adhering the continuous fiber material K to each of the second plate portions 10d to which the adhesive has been applied.

Then each disc spring 10 is removed from the jig J and the first and second clutch facings 11 and 12 are heat formed using a heat-hardening resin such as phenol resin. Next, the first and second clutch facings 11 and 12 are heat treated for 8 hours at 80°C and the heat-hardening resin is hardened. According to this process, the first and second clutch facings 11 and 12 that are adhered to the first and second plate portions 10c and 10d of each disc spring 10 are obtained.

Therefore, in this second example embodiment, the retaining portions 10h and 10i of the first and second plate portions 10c and 10d, respectively, are each made to protrude inward in the axial direction and formed in a generally triangular hook shape with the tip of each protruding portion pointing radially inward. Therefore, the retaining portions 10h and 10i are not provided on the outside in the axial direction (i.e., on the adhesive surfaces to which the adhesive has been applied) of the first and second plate portions 10c and 10d so the effective friction area of the first and second clutch facings 11 and 12 from the adhesive surface of the first and second plate portions 10c and 10d increases in the axial direction, thus extending the friction life of the first and second clutch facings 11 and 12.

Moreover, because a sufficient increase in the effective friction area of the first and second clutch facings 11 and 12 from the adhesive surfaces of the first and second plate portions 10c and 10d can be ensured, the effective friction area of the first and second clutch facings 11 and 12 can be reduced in the axial direction so the rotary inertia moment of the clutch disc 1 can also be reduced.

Incidentally, the invention is not limited to the foregoing example embodiments, but also includes various modified examples thereof. For example, in the foregoing example embodiments, the clutch facings 11 and 12 are adhered by winding the continuous fiber material K in a spiral on the adhesive surface of the plate portions 10c and 10d already provided with the retaining portions 10f, 10g, 10h, and 10i. Alternatively, however, the retaining portions may be made to protrude from the plate portions on the adhesive surface side after the clutch facings have been adhered by winding the continuous fiber material in a spiral on the adhesive surface of each plate portion, and some of the continuous fiber material may be retained by the retaining portions at that time (i.e., when the retaining portions are made to protrude).

Also, in the foregoing example embodiments, the clutch facings having some of the continuous fiber material retained by the retaining portions are first heat formed using a heat-hardening resin such as phenol resin, after which they are heat treated and the heat-hardening resin is hardened. Alternatively, however, the clutch facings may first be heat formed using a heat-hardening resin such as phenol resin in a state in which the clutch facings have been adhered by winding the continuous fiber material in a spiral on the adhesive surface of each plate portion, after which they may be heat treated and the heat-hardening resin hardened, and then the retaining portions may be made to protrude out from the plate portions and some of the continuous fiber material may be retained by the retaining portions at this time (i.e., when the retaining portions are made to protrude).

Also in the foregoing example embodiments, eight disc springs 10 are provided on the outer peripheral portion of the clutch plate 7, but the number of disc springs is not limited to this. That is, anywhere from 6 to 9 disc springs may be provided at predetermined intervals on the outer peripheral portion of the clutch plate.

Also in the foregoing example embodiments, each of the protruding portions of the retaining portions 10f, 10g, 10h, and 10i is formed in a substantially triangular hook shape, but they are not limited to this shape. That is, the protruding portions may also be substantially square or trapezoidal or the like. Moreover, in the foregoing example embodiments, three of each of the retaining portions 10f, 10g, 10h, and 10i are provided on the first and second plate portions 10c and 10d, but the number of retaining portions is not limited to this. That is, any number of retaining portions may be provided.

Furthermore, in the foregoing example embodiments, the tips of the substantially triangular protruding portions of the retaining portions 10f, 10g, 10h, and 10i point either radially outward or radially inward. Alternatively, however, the tips of the protruding portions may also point in the circumferential direction. In this case, for example, if the tips of the protruding portions of the retaining portions point in the direction opposite the direction in which the pressure plate and the flywheel rotate, the shearing force that is applied by repeated use of the clutch tends to be received by the continuous fiber material that is retained by the retaining portions. This improves the adhesion performance between the first and second clutch facings and the first and second plate portions of the disc springs, which is extremely advantageous.

While the invention has been described with reference to example embodiments thereof, it is to be understood that the invention is not limited to the example embodiments or constructions. To the contrary, the invention is intended to cover various modifications and equivalent arrangements. In addition, while the various elements of the example embodiments are shown in various combinations and configurations, which are exemplary, other combinations and configurations, including more, less or only a single element, are also within the spirit and scope of the invention.

## Claims

1. A clutch disc (1) provided with a first clutch facing (11) on one side in the axial direction and a second clutch facing (12) on the other side in the axial direction, **characterised in that**:
a disc spring (10) has a first plate (10c) and a second plate (10d) and is elastically deformable in the axial direction of the first plate and the second plate, and the disc spring is provided between the first clutch facing and the second clutch facing in the axial direction;
an inside surface in the axial direction of the first clutch facing (11) on one side in the axial direction, from among the two clutch facings, is adhered to the first plate, while an inside surface in the axial direction of the second clutch facing (12) on the other side in the axial direction is adhered to the second plate; and
a retaining portion (10f, 10g; 10h, 10i) that retains some continuous fiber material (K) that forms the first clutch facing and the second clutch facing is provided on each of the first plate and the second plate.

2. The clutch disc according to claim 1, wherein the retaining portion protrudes in a hook shape toward the outside in the axial direction from each of the first plate and the second plate.

3. The clutch disc according to claim 2, wherein a tip of the portion that protrudes in the hook shape points radially outward.

4. The clutch disc according to claim 1, wherein the retaining portion protrudes in a hook shape toward the inside in the axial direction from each of the first plate and the second plate.

5. The clutch disc according to claim 4, wherein a tip of the portion that protrudes in the hook shape points radially inward.

6. The clutch disc according to claim 4 or 5, wherein the first plate has a hole that is formed in a portion corresponding to the retaining portion of the first plate and that is used for passing the continuous fiber material, and the second plate has a hole that is formed in a portion corresponding to the retaining portion of the second plate and that is used for passing the continuous fiber material.

7. The clutch disc according to any one of claims 2 to 6, wherein the tip of the portion that protrudes in the hook shape is substantially triangular.

8. The clutch disc according to any one of claims 1 to 7, wherein a plurality of the disc springs are provided on an outer peripheral portion of the clutch disc, and the continuous fiber material is retained by a plurality of the first plates and the second plates.
